# FASCICULE DE BREVET EUROPEEN

(11) **EP 0 882 616 B1**
(45) Date de publication et mention de la délivrance du brevet: **29.01.2003**
(21) Numéro de dépôt: 98401294.8
(22) Date de dépôt: 29.05.1998
(51) Int. Cl.: B60J 10/02, E06B 3/54

(54) **Dispositif pour la fixation d'une vitre**
Vorrichtung zur Befestigung einer Fensterscheibe
Device for fixing a window pane

(30) Priorité: 02.06.1997 FR 9706755
(43) Date de publication de la demande: 09.12.1998
(73) Titulaire: RENAULT VEHICULES INDUSTRIELS, 69800 Saint Priest (FR)
(72) Inventeur: Verger, Stéphane, 07100 Annonay (FR)
(74) Mandataire: Palix, Stéphane

(56) Documents cités:
- EP-A- 0 201 384
- EP-A- 0 307 317
- FR-A- 2 246 717
- US-A- 3 967 424

## Description

L'invention concerne un dispositif pour la fixation d'une vitre.

L'invention concerne plus particulièrement un dispositif pour la fixation d'une vitre, du type dans lequel la vitre est collée par une face intérieure contre un cadre dont une face de chant, sensiblement perpendiculaire au plan de la vitre, délimite une ouverture recouverte par la vitre, du type dans lequel le cadre comporte une face interne et une face externe qui est sensiblement parallèle au plan de la vitre et sur laquelle la vitre est collée, et du type dans lequel la vitre porte un profilé qui est assemblé sur la vitre avant la fixation de celle-ci et qui coopère avec le cadre pour assurer le positionnement de la vitre par rapport au cadre lors du collage de la vitre.

En particulier, l'invention pourra être mise en oeuvre pour la fixation d'une vitre de véhicule automobile.

Dans le document FR-A-2.716.416, il est proposé un dispositif pour la fixation d'une vitre collée dans lequel la vitre porte, sur le bord de sa face intérieure, un profilé comportant une lèvre qui déborde à la périphérie du vitrage et qui sert notamment au centrage de la vitre avant que le cordon de colle n'ait polymérisé.

Selon ce dispositif, la vitre doit être agencée dans un cadre qui comporte un renfoncement concave de manière à délimiter, tout autour de la vitre, un élément de paroi qui est tourné en direction sensiblement du centre de la vitre et contre lequel le profil vient s'appliquer pour centrer la vitre.

A l'aide d'un tel dispositif, il est donc impossible d'agencer deux vitres côte à côte sans que l'un des montants du cadre de chacune, ou un montant commun aux deux vitres, soit apparent sensiblement au même niveau que la face extérieure de la vitre.

Par ailleurs, dans ce dispositif, le profilé est lui aussi visible depuis l'extérieur puisqu'il déborde à la périphérie de la vitre.

De plus, les dispositifs décrits dans ce document permettent d'assurer un centrage de la vitre et permettent de maîtriser avec précision la position de la vitre selon une direction perpendiculaire à son plan général, grâce à des talons de positionnement du profilé qui viennent en appui contre la surface du montant contre laquelle la vitre est collée, mais la vitre n'est pas maintenue en place pendant le collage selon la direction perpendiculaire à son plan de sorte que les outils de pose et de maintien de la vitre doivent être maintenus en place pendant toute la durée de la polymérisation et de la prise de la colle.

Le document US 3 967 424 décrit un dispositif de fixation de la vitre d'un hublot de bateau. Une telle vitre comporte sur sa face intérieure un élément profilé périphérique. Cet élément périphérique coopère avec un cadre par rapport auquel doit être maintenue la vitre. Cette coopération s'effectue soit par la face extérieure du cadre, et il nécessite alors des moyens de collage très performants ou des éléments additionnels pour empêcher l'arrachement de la vitre. Dans le cas où la coopération entre l'élément profilé et le cadre s'effectue par la face périphérique du cadre, le maintien de la vitre est uniquement obtenu par friction, avec des risques d'irrégularités dans les forces de maintien.

L'invention a donc pour objet de proposer un nouveau dispositif de fixation d'une vitre qui permette d'une part de réaliser des ensembles vitrés comportant plusieurs vitres juxtaposées sans que n'apparaissent entre deux vitres ni les cadres de ces vitres, ni les profilés qui permettent d'en assurer le positionnement. Par ailleurs, l'invention a aussi pour objet de proposer un dispositif qui permette d'assurer le maintien de la vitre en position pendant la polymérisation de la colle, l'outillage de maintien pouvant alors être utilisé pour la fixation d'une autre vitre au bénéfice d'un coût réduit de mise en oeuvre du dispositif.

Dans ce but, l'invention propose un dispositif du type décrit précédemment, caractérisé en ce que le profilé s'étend vers l'intérieur depuis une zone de la face intérieure de la vitre qui est en retrait vers le centre de la vitre par rapport à une zone de bord de la face intérieure par laquelle la vitre est collée sur le cadre.

Selon d'autres caractéristiques de l'invention :
- le profilé s'étend vers l'intérieur au travers de l'ouverture et coopère avec la face interne du cadre pour retenir la vitre selon la direction perpendiculaire à son plan général ;
- le profilé comporte, sur un bord intérieur libre, un bec qui s'étend sensiblement dans le plan de la vitre dans la direction opposée au centre de la vitre et qui coopère avec la face interne du cadre ;
- le bec du profilé est susceptible d'être replié vers l'extérieur selon la direction perpendiculaire au plan de la vitre pour permettre son engagement au travers de l'ouverture lorsque la vitre est amenée en position de fixation ;
- le profilé comporte au moins un talon d'appui qui coopère avec la face externe du cadre pour assurer le positionnement de la vitre selon la direction perpendiculaire à son plan général ;
- le profilé comporte une surface d'appui qui coopère avec la face de chant du cadre pour assurer le centrage de la vitre par rapport au cadre ;
- la surface d'appui s'étend sur une portion seulement de la longueur du profilé ;
- la surface d'appui est portée par une pièce rapportée qui est fixée sur le profilé ;
- la vitre s'étend dans un plan sensiblement vertical, et la surface d'appui s'étend le long d'un bord inférieur de la vitre par lequel la vitre est en appui sur le cadre du fait de la pesanteur ;
- le talon d'appui s'étend aussi le long d'au moins un bord latéral sensiblement vertical de la vitre ; et
- le profilé s'étend sur toute la périphérie de la vitre.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective illustrant une vitre destinée à être montée par collage sur un cadre ;
- la figure 2 est une vue partielle en perspective illustrant plus en détails un premier mode de réalisation du dispositif de fixation de la vitre selon l'invention ;
- les figures 3 et 4 sont des vues en section illustrant le montage de vitres selon le dispositif de l'invention ; et
- les figures 5 et 6 sont des vues en section illustrant en deux endroits différents un deuxième mode de réalisation d'un dispositif de fixation d'une vitre selon l'invention.

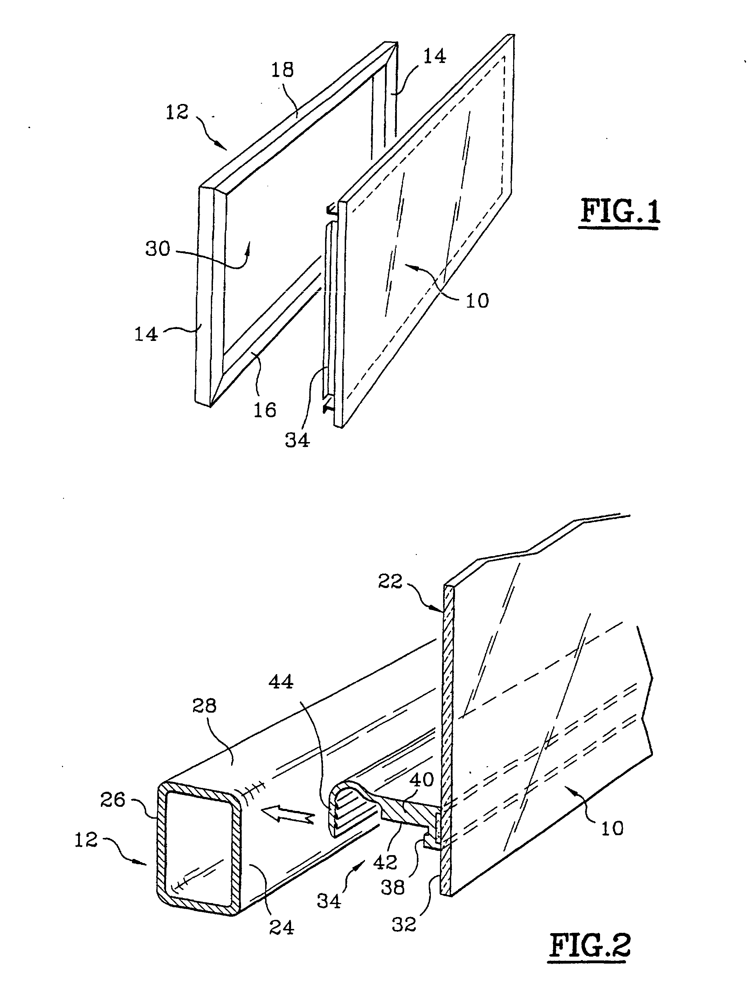

On a représenté sur la figure 1 une vitre 10 de forme sensiblement rectangulaire et plane qui est destinée à être fixée sur un cadre 12 qui est en l'occurrence constitué de deux montants verticaux 14 réunis par un montant horizontal inférieur 16 et un montant horizontal supérieur 18.

La forme rectangulaire de la vitre 10 et du cadre 12 représentés est un exemple de réalisation non limitatif, le dispositif de fixation de la vitre selon l'invention ayant vocation à être mis en oeuvre quelle que soit la forme de la vitre et du cadre. La vitre 10 peut faire partie d'un ensemble de vitres juxtaposées.

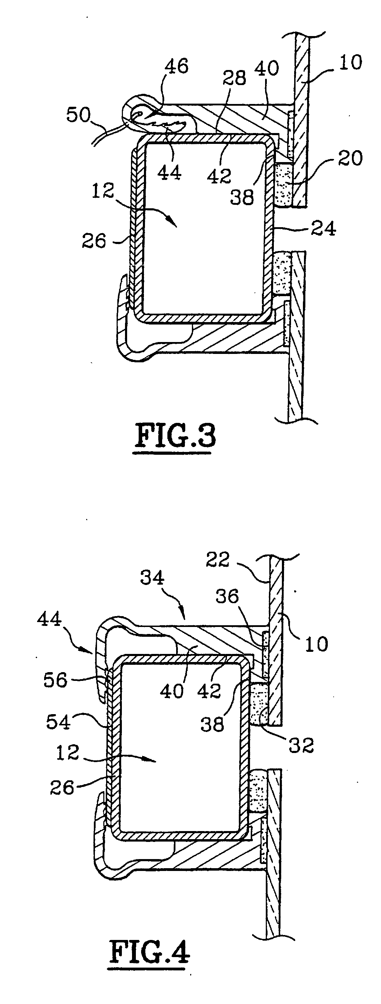

Comme on peut le voir plus particulièrement sur les figures 2 et 3, la vitre 10 est destinée à être fixée sur le cadre 12 par collage, c'est-à-dire par interposition d'un cordon de colle 20 entre une face intérieure 22 de la vitre 10 et une face externe 24 du cadre 12.

Comme on peut le voir plus particulièrement sur la figure 2, le cadre 12 est ici réalisé sous la forme d'un tube de section rectangulaire qui comporte ainsi une face interne 26 sensiblement parallèle à la face externe 24 à laquelle elle est réunie par une face de chant 28 qui s'étend selon une direction sensiblement perpendiculaire au plan de la vitre 10 et qui délimite une ouverture 30 devant laquelle s'étend la vitre 10.

Conformément aux enseignements de l'invention, le cordon de colle 20 est destiné à coopérer avec le bord 32 de la face intérieure 22 de la vitre 10 et celle-ci comporte un profilé 34 qui s'étend vers l'intérieur depuis une zone 36 de la face intérieure 22 de la vitre 10 qui est agencée en retrait vers le centre par rapport au bord 32 de cette face 22. Le profilé 34 est destiné à coopérer avec les montants 14, 16, 18 du cadre 12 de sorte qu'il suit sensiblement la forme de ce dernier.

Le profilé 34 peut être réalisé par exemple en caoutchouc ou en matériau élastomère, de préférence en un matériau qui limite les bruits de contact avec le cadre 12 en présence de vibrations. Éventuellement, une armature de rigidification peut être prévue afin de renforcer la tenue dans le temps des caractéristiques mécaniques du profilé 34. Par ailleurs, il est possible de prévoir que le profilé 34 soit réalisé par un procédé d'extrusion bi-matière.

Le profilé 34 est assemblé sur la vitre 10 par exemple par collage, avant le montage de la vitre 10, par exemple avant même que celle-ci ne soit livrée sur le lieu de montage.

Le profilé 34 peut être réalisé sous la forme de plusieurs éléments qui s'étendent chacun parallèlement à un des montants 14, 16, 18 du cadre 12 et qui sont raccordés bout à bout au niveau des coins du cadre 12. De préférence, les extrémités de ces éléments sont alors découpées en biseaux. Toutefois, le profilé peut aussi être réalisé en une seule pièce recourbée pour suivre le contour du cadre 12, notamment si celui-ci comporte des coins arrondis.

Comme on peut le voir sur les figures 2 à 4, le profilé 34 présente, lorsqu'il est vu en section, un talon d'appui 38 qui est susceptible de coopérer avec la face externe 24 du cadre 12 afin de déterminer avec précision la position en profondeur de la vitre 10 selon la direction perpendiculaire au plan général de celle-ci.

Par ailleurs, le profilé 34 comporte un tronçon principal 40 qui s'étend vers l'intérieur au travers de l'ouverture 30, en regard de la face de chant 28 du cadre 12, et ce tronçon principal 40 porte une surface d'appui 42 susceptible de venir en appui contre la face de champ 28 pour assurer le positionnement de la vitre 10 selon une direction perpendiculaire au montant considéré du cadre 12, dans le plan de vitre.

Le tronçon principal 40 du profilé 34 porte à son extrémité libre un bec déformable 44 qui est destiné à venir en appui contre la face interne 26 du montant du cadre 12. Ainsi, lorsque la vitre 10 est montée, le bec déformable 44 s'étend sensiblement perpendiculairement au tronçon principal 40 du profilé 34, dans la direction opposée au centre de l'ouverture 30.

Comme on peut le voir plus particulièrement sur la figure 3, le bec 44 est susceptible d'être rabattu vers l'extérieur contre le tronçon principal 40, du côté de celui-ci qui est en regard de la face de chant 28 du montant du cadre 12.

Dans cette position, le bec 44 et le tronçon principal 40 délimitent un repli 46 dans lequel on aura pris soin de disposer une corde 50, sur toute la longueur du profilé 34, avant le montage de la vitre en position de fixation, c'est-à-dire avant que le profilé 34 ne soit engagé au travers de l'ouverture 30 depuis l'extérieur en direction de l'intérieur.

Il en résulte que, lorsque la vitre a atteint sa position de fixation, ainsi qu'on peut le voir à la figure 3, le bec 44 se retrouve coincé, replié, entre le tronçon principal 40 et la face de chant 28 du montant.

En prévoyant que les deux extrémités de la corde 50 dépassent en dehors du repli 46, du côté intérieur du cadre 12, il suffit alors de tirer sur la corde 50 pour forcer le bec 44 vers l'intérieur et l'amener dans sa position représentée à la figure 4.

Avantageusement, le bec déformable 44 vient alors s'appliquer contre la face interne d'un panneau d'habillage 54 dont le bord 56 qui s'étend le long de l'ouverture 30 est ainsi dissimulé grâce au bec 44 du profilé 34. On évite ainsi la nécessité d'une pièce de finition supplémentaire. Par ailleurs, le bec 44 déformable et souple s'adapte au panneau 54 quelle que soit l'épaisseur de ce dernier. Dans certains cas, le bec 44 peut aussi assurer à lui seul la fixation du bord 56 du panneau d'habillage.

De préférence, le profilé 34 s'étend sur toute la longueur de la périphérie de l'ouverture 30 et il assure ainsi un positionnement parfait de la vitre 10 qui, de plus, n'a pas besoin d'être maintenue lors de la prise du cordon de colle 20 grâce au fait d'une part qu'elle est en appui par le talon 38 et les surfaces d'appui 42 du profilé 34 et que d'autre part elfe est retenue dans cette position par le bec déformable 44 qui s'appuie sur la face interne 26 du montant du cadre 12.

Ainsi, bien que le profilé 34 n'assure pas la fixation définitive de la vitre 10, il en assure le maintien pendant la phase de collage, ce qui permet de s'affranchir de tout outillage de maintien durant cette phase.

Toutefois, dans certains cas, on peut souhaiter que la vitre 10 ne soit pas centrée dans les deux sens selon une même direction dans son plan.

A cet effet, on cherchera à ce que le profilé 34 ne soit en appui contre la surface de champ 28 du cadre que le long d'un, deux ou trois des montants 14, 16, 18 du cadre 12 dans le cas d'une ouverture rectangulaire.

On peut par exemple souhaiter que la position verticale de la vitre par rapport au cadre 12 soit déterminée uniquement par rapport au montant horizontal inférieur 16. En prévoyant un jeu entre le profilé 34 et la face de chant 28 du montant horizontal supérieur 18, il sera possible de relâcher les contraintes dimensionnelles pesant à la fois sur le profilé 34, sur son positionnement sur la vitre 10 et sur le dimensionnement de l'ouverture 30.

Toutefois, il est souhaitable de ne pas devoir réaliser un profilé 34 spécifique, ni de devoir modifier la position relative du profilé 34 par rapport au montant du cadre 12.

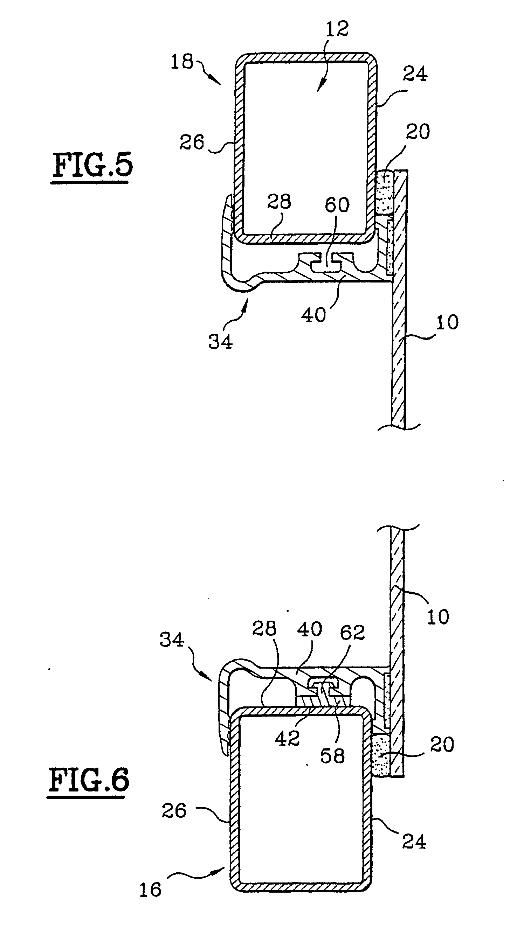

Aussi, ainsi que cela est représenté sur les figures 5 et 6, il est proposé que la surface d'appui 42 du profilé 34 soit portée par une pièce rapportée destinée à être montée sur certaines portions du tronçon principal 40.

Le tronçon principal 40 est alors muni d'une rainure 60 en T qui s'étend sur toute la longueur du profilé 34. Ainsi, la surface d'appui 42 peut être portée par une baguette 58 dont une face forme la surface d'appui 42 et dont la face opposée porte un tenon 62 de forme complémentaire de la rainure en T afin d'assurer la fixation de la baguette 58 par rapport au profilé 34. De la sorte, on peut prévoir qu'une portion du profilé 34 qui s'étend le long du montant horizontal inférieur 16 soit muni d'une baguette d'appui 58, ainsi que cela est représenté sur la figure 6, tandis qu'une portion du profilé 34 qui s'étend en regard du montant horizontal supérieur 18 en serait dépourvu, ainsi que cela est représenté à la figure 5.

De la même manière, on peut prévoir que la position horizontale de la vitre 10 par rapport au cadre 12 soit assurée uniquement en référence à l'un des deux montants verticaux 14.

Comme on peut le voir sur les figures 3 et 4, il est particulièrement aisé, grâce au dispositif de fixation d'une vitre 10 selon l'invention, de réaliser des assemblages de vitres adjacentes dans lequel les bords des vitres sont particulièrement proches l'un de l'autre et au niveau desquels n'affleurent ni un élément de structure, ni le profilé de fixation.

Bien entendu, la zone de bord 32 et la zone 36 de la face intérieure 22 sur laquelle est fixée le profilé 34 seront de préférence émaillées afin que l'on ne puisse pas voir par transparence de l'extérieur le cordon de colle 20 et le profilé 34.

Par ailleurs, le positionnement du profilé 34 en retrait vers le centre de la vitre par rapport au cordon de colle 20 permet de réaliser le démontage de la vitre 20 depuis l'extérieur, par découpage du cordon 20 sans détruire le profilé 34 qui peut ainsi être réutilisé pour le remontage de la vitre 10.

## Revendications

1. Dispositif pour la fixation d'une vitre, du type dans lequel la vitre (10) est collée par une face intérieure (22) contre un cadre (12) dont une face de chant (28), sensiblement perpendiculaire au plan de la vitre (10), délimite une ouverture (30) recouverte par la vitre (10), du type dans lequel le cadre (12) comporte une face interne (26) et une face externe (24) qui est sensiblement parallèle au plan de la vitre (10) et sur laquelle la vitre (10) est collée, ledit dispositif incluant un profilé (34) qui est assemblé sur la vitre (10) avant la fixation de celle-ci et qui coopère avec le cadre (12) pour assurer le positionnement de la vitre (10) par rapport au cadre (12), et du type dans lequel le profilé (34) s'étend vers l'intérieur depuis une zone (36) de la face intérieure (22) de la vitre (10) qui est en retrait vers le centre de la vitre (10) par rapport à une zone de bord (32) de la face intérieure (22) par laquelle la vitre (10) est collée sur le cadre (12),
**caractérisé en ce que** le profilé (34) s'étend vers l'intérieur au travers de l'ouverture (30) et coopère avec la face interne (26) du cadre (12) pour retenir la vitre (10) selon la direction perpendiculaire à son plan général.

2. Dispositif selon la revendication 1, **caractérisé en ce que** le profilé (34) comporte, sur un bord intérieur libre, un bec (44) qui s'étend sensiblement dans le plan de la vitre (10) dans la direction opposée au centre de la vitre (10) et qui coopère avec la face interne (26) du cadre (12).

3. Dispositif selon la revendication 2, **caractérisé en ce que** le bec (44) du profilé (34) est susceptible d'être replié vers l'extérieur selon la direction perpendiculaire au plan de la vitre (10) pour permettre son engagement au travers de l'ouverture (30) lorsque la vitre (10) est amenée en position de fixation.

4. Dispositif selon l'une quelconque des revendications précédentes, **caractérisé en ce que** le profilé (34) comporte au moins un talon d'appui (38) qui coopère avec la face externe (24) du cadre (12) pour assurer le positionnement de la vitre (10) selon la direction perpendiculaire à son plan général.

5. Dispositif selon l'une quelconque des revendications précédentes, **caractérisé en ce que** le profilé (34) comporte une surface d'appui (42) qui coopère avec la face de chant (28) du cadre (12) pour assurer le centrage de la vitre (10) par rapport au cadre (12).

6. Dispositif selon la revendication 5, **caractérisé en ce que** la surface d'appui (42) s'étend sur une portion seulement de la longueur du profilé (34).

7. Dispositif selon la revendication 5, **caractérisé en ce que** la surface d'appui (42) est portée par une pièce rapportée (58) qui est fixée sur le profilé (34).

8. Dispositif selon l'une quelconque des revendications 6 ou 7, **caractérisé en ce que** la vitre (10) s'étend dans un plan sensiblement vertical, et **en ce que** la surface d'appui s'étend le long d'un bord inférieur de la vitre (10) par lequel la vitre (10) est en appui sur le cadre (12) du fait de la pesanteur.

9. Dispositif selon la revendication 8, **caractérisé en ce que** le talon d'appui (42) s'étend aussi le long d'au moins un bord latéral sensiblement vertical de la vitre (10).

10. Dispositif selon l'une quelconque des revendications précédentes, **caractérisé en ce que** le profilé (34) s'étend sur toute la périphérie de la vitre (10).

## Claims

1. Device for fastening a pane, of the type in which the pane (10) is adhesively bonded via an inner face (22) to a frame (12), an edge face (28) of which, approximately perpendicular to the plane of the pane (10), defines an opening (30) covered by the pane (10), of the type in which the frame (12) has an internal face (26) and an external face (24) that is approximately parallel to the plane of the pane (10) and to which external face the pane (10) is adhesively bonded, said device including a section (34) which is joined to the pane (10) before the latter is fastened and which cooperates with the frame (12) in order to position the pane (10) in relation to the frame (12), and of the type in which the section (34) extends towards the inside from a region (36) of the inner face (22) of the pane (10) that is set back towards the centre of the pane (10) in relation to an end region (32) of the inner face (22) via which the pane (10) is adhesively bonded to the frame (12),
**characterized in that** the section (34) extends towards the inside through the opening (30) and cooperates with the internal face (26) of the frame (12) in order to retain the pane (10) in the direction perpendicular to its general plane.

2. Device according to Claim 1, **characterized in that** the section (34) has, on a free inner edge, a lip (44) which extends, approximately in the plane of the pane (10), in the opposite direction from the centre of the pane (10) and which cooperates with the internal face (26) of the frame (12).

3. Device according to Claim 2, **characterized in that** the lip (44) of the section (34) can be bent over towards the outside in the direction perpendicular to the plane of the pane (10) in order to allow it to engage through the opening (30) when the pane (10) is brought into the fastening position.

4. Device according to any one of the preceding claims, **characterized in that** the section (34) has at least one bearing heel (38) that cooperates with the external face (24) of the frame (12) in order to position the pane (10) in the direction perpendicular to its general plane.

5. Device according to any one of the preceding claims, **characterized in that** the section (34) has a bearing surface (42) that cooperates with the edge face (28) of the frame (12) in order to centre the pane (10) in relation to the frame (12).

6. Device according to Claim 5, **characterized in that** the bearing surface (42) extends only over a portion of the length of the section (34).

7. Device according to Claim 5, **characterized in that** the bearing surface (42) is supported by an attached piece (58) which is fastened to the section (34).

8. Device according to either of Claims 6 and 7, **characterized in that** the pane (10) lies in an approximately vertical plane and **in that** the bearing surface extends along a lower edge of the pane (10) via which edge the pane (10) bears on the frame (12) because of gravity.

9. Device according to Claim 8, **characterized in that** the bearing surface (42) also extends along at least one approximately vertical lateral edge of the pane (10).

10. Device according to any one of the preceding claims, **characterized in that** the section (34) extends over the entire periphery of the pane (10).

## Patentansprüche

1. Vorrichtung zur Befestigung einer Glasscheibe, wobei die Glasscheibe (10) auf einer Innenseite (22) mit einem Rahmen (12) verklebt ist, dessen eine Schmalseite (28), die im wesentlichen senkrecht zur Ebene der Glasscheibe (10) verläuft, eine durch die Glasscheibe (10) abgedeckte Öffnung (30) begrenzt und wobei der Rahmen (12) eine Innenseite (26) und eine Außenseite (24) aufweist, die im wesentlichen parallel zur Ebene der Glasscheibe (10) angeordnet ist und mit der die Glasscheibe (10) verklebt ist, wobei die Vorrichtung ein Profilteil (34) aufweist, das mit der Glasscheibe (10) vor deren Befestigung zusammengebaut wird und das mit dem Rahmen (12) derart zusammenwirkt, dass die Positionierung der Glasscheibe (10) relativ zum Rahmen (12) gewährleistet wird und wobei sich das Profilteil (34) nach innen hin erstreckt, ausgehend von einem Bereich (26) der Innenseite (22) der Glasscheibe (10), der zur Mitte der Glasscheibe (10) hin einen Absatz bildet bezüglich eines Randbereichs (32) der Innenseite (22), über die die Glasscheibe (10) mit dem Rahmen (12) verklebt ist, **dadurch gekennzeichnet, dass** sich das Profilteil (34) durch die Öffnung (30) nach innen erstreckt und mit der Innenseite (26) des Rahmens (12) dahingehend zusammenwirkt, dass die Glasscheibe (10) in einer Richtung senkrecht zu ihrer Hauptebene gehalten wird.

2. Vorrichtung nach Anspruch 1, **dadurch gekennzeichnet, dass** das Profilteil (34) an seinem freien Innenrand mit einem Vorsprung (44) versehen ist, der sich im wesentlichen in der Ebene der Glasscheibe (10) in einer Richtung erstreckt, die entgegengesetzt ist zur Mitte der Glasscheibe (10) hin und der mit der Innenseite (26) des Rahmens (12) zusammenwirkt.

3. Vorrichtung nach Anspruch 2, **dadurch gekennzeichnet, dass** der Vorsprung (44) des Profilteils (34) nach außen umklappbar ist in eine Richtung senkrecht zur Ebene der Glasscheibe (10) um sein Einsetzen in die Öffnung (30) zu ermöglichen, wenn die Glasscheibe (10) in ihre Befestigungsstellung überführt wird.

4. Vorrichtung nach einem der vorhergehenden Ansprüche, **dadurch gekennzeichnet, dass** das Profilteil (34) wenigstens einen Haltesteg (38) aufweist, der mit der Außenseite (24) des Rahmens (12) zusammenwirkt, um die Positionierung der Glasscheibe (10) in der Richtung senkrecht zu ihrer Hauptebene zu gewährleisten.

5. Vorrichtung nach einem der vorhergehenden Ansprüche, **dadurch gekennzeichnet, dass** das Profilteil (34) eine Stützfläche (42) aufweist, die mit der Schmalseite (28) des Rahmens (12) zusammenwirkt, um die Positionierung der Glasscheibe (10) relativ zum Rahmen (12) zu gewährleisten.

6. Vorrichtung nach Anspruch 5, **dadurch gekennzeichnet, dass** sich die Stützfläche (42) nur über einen Teil der Länge des Profilteils (34) erstreckt.

7. Vorrichtung nach Anspruch 5, **dadurch gekennzeichnet, dass** die Stützfläche (42) auf einem Zusatzteil (58) ausgebildet ist, das am Profilteil (34) befestigt ist.

8. Vorrichtung nach einem der Ansprüche 6 oder 7, **dadurch gekennzeichnet, dass** sich die Glasscheibe (10) in einer im wesentlichen senkrechten Ebene erstreckt und dass sich die Stützfläche entlang des unteren Randes der Glasscheibe (10) erstreckt, über den sich die Glasscheibe (10) auf dem Rahmen (12) auf Grund ihres Eigengewichtes abstützt.

9. Vorrichtung nach Anspruch 8, **dadurch gekennzeichnet, dass** sich der Haltesteg (38) auch entlang wenigstens eines im wesentlichen senkrechten Seitenrandes der Glasscheibe (10) erstreckt.

10. Vorrichtung nach einem der vorhergehenden Ansprüche, **dadurch gekennzeichnet, dass** sich das Profilteil (34) über den gesamten Umfang der Glasscheibe (10) erstreckt.
